# EUROPÄISCHE PATENTSCHRIFT

(11) **EP 1 188 945 B1**
(45) Veröffentlichungstag und Bekanntmachung des Hinweises auf die Patenterteilung: **16.07.2003**
(21) Anmeldenummer: 01120163.9
(22) Anmeldetag: 22.08.2001
(51) Int. Cl.: F16D 3/68

(54) **Steckbare, drehelastische Wellenkupplung**
Connectable flexible coupling
Accouplement d'arbres flexible enfichable

(30) Priorität: 23.08.2000 DE 20014606 U
(43) Veröffentlichungstag der Anmeldung: 20.03.2002
(73) Patentinhaber: KTR KUPPLUNGSTECHNIK GMBH, D-48432 Rheine (DE)
(72) Erfinder: Deister, Johannes, 49808 Lingen (DE); Artmann, André, 48429 Rheine (DE)
(74) Vertreter: Jabbusch, Matthias

(56) Entgegenhaltungen:
- US-A- 2 891 395
- US-A- 4 034 575

## Beschreibung

Die Erfindung betrifft eine steckbare, axial- und winkelbewegliche Wellenkupplung zur drehelastischen und spielfreien Drehmomentübertragung mit zwei kongruenten, auf den An- und Abtriebswellen befestigbaren Kupplungsnaben aus Metall, mit axialgerichteten, drehmomentübertragenden Kupplungsklauen und zwischen den Klauen angeordneten Dämpfungselementen aus einem elastomeren Material.
Eine solche Kupplung ist aus US-A-4 034 575 bekant.
Zum Übertragen von Drehmomenten von einer Antriebsmaschine auf eine angetriebene Einheit ist es bekannt, drehelastische Winkel- und radialbewegliche Kupplungen einzusetzen, deren An- und Abtriebsteile mit profilverzahnten oder klauenförmigen, axialgerichteten Vorsprüngen formschlüssig ineinandergreifen. Zwischen den Klauen der Kupplungsnaben befinden sich auf Druck beanspruchte Verbindungsteile aus elastomerem Material, beispielsweise Polyurethan. Sie gewährleisten eine dämpfungselastische Drehmomentübertragung. Die während des Betriebes auftretenden Schwingungen und Stöße werden gedämpft und abgebaut. Vielfach sind die zwischen den Klauen dämpfend wirkenden Verbindungsteile zu einem einlegbaren, sternförmigen Kupplungskranz zusammengefaßt.

Die Beanspruchung der elastischen Elemente ausschließlich auf Druck hat für die Kupplung den Vorteil einer bedeutend höheren Belastbarkeit der einzelnen Zähne.

Die bekannten Kupplungen mit auf Druck beanspruchten, elastischen Elementen bauen in der Regel groß, was durch die Anordnung der drehmomentübertragenden Kupplungsklauen verursacht wird. Die Klauen befinden sich entweder axial vor den Nabenkörpern oder aber radial oberhalb der Nabenkörper, was entweder zu einem großen Wellenabstand oder zu einem größeren Außendurchmesser der Kupplung führt.

Ferner haben die Klauenkupplungen wegen des für die Montage erforderlichen Fügespiels zwischen Nabe und elastomerer Einlage ein gewisses Verdrehspiel, das sich bei wechselnden Belastungsrichtungen mit Nulldurchgang des Drehmomentes negativ auf das Übertragungsverhalten des Antriebsstranges auswirkt und gegebenenfalls den Einsatz dieser Kupplung für solche Antriebe ausschließt. Möglichkeiten, dieses Verdrehspiel zu eliminieren, gibt es nur, wenn die Kupplungsnaben nach dem Einlegen der elastischen Verbindungselemente mit großem Kraftaufwand ineinander gedrückt werden, wofür unter Umständen eine Vorrichtung eingesetzt werden muß.

Unter Beibehaltung der Vorteile der bekannten Kupplungen ist die weitere Entwicklung auf eine Verringerung der Abmessungen gerichtet. Der Erfindung liegt daher die Aufgabe zugrunde, eine sehr kompakte Kupplung mit geringster Länge, d.h. kleinstem Wellenabstand, und kleinstem Außendurchmesser zu schaffen, die ferner bei wechselnder Belastungsrichtung mit Durchgang durch den Nullpunkt im gesamten Kennlinienbereich der Kupplung spielfrei ist und eine einfache Montage bei geringem Kraftaufwand ermöglicht.

Die Erfindung löst die Aufgabe dadurch, daß für eine Kupplung der eingangs genannten Gattung zusätzliche und von den zwischen den Klauen angeordneten Dämpfungselementen unabhängige, konische und in Aufnahmeöffnungen der Kupplungsnaben greifende, zapfenförmige Dämpfungselemente vorgesehen sind, daß alle Dämpfungselemente durch kreisbogenförmige Verbindungsteile aus elastomerem Material untereinander verbunden sind, wobei sich die Verbindungsteile in Umfangsrichtung der Kupplung erstrecken und wechselseitig an den Enden der zwischen den Kupplungsklauen positionierten Dämpfungselemente ansetzen, wobei die zapfenförmigen Dämpfungselemente an den den Kupplungsnaben zugewandten Seiten (Innenseiten) der Verbindungsteile und die ihnen zugeordneten Aufnahmeöffnungen an den Stirnseiten der Klauen angeordnet sind.

Vorteilhafterweise erstrecken sich die Kupplungsklauen über die gesamte Nabenlänge. Die Nabe ist dadurch nicht länger ausgebildet als die Länge einer Kupplungsklaue. Kupplungsklaue und Nabe sind nicht verschiedenen Abschnitten der Drehachse zugeordnet, sondern überlappen sich auf gemeinsamen Abschnitten der Drehachse.

In weiterer vorteilhafter Ausgestaltung des Erfindungsgegenstandes wird vorgeschlagen, jede Kupplungsnabe mit einer zentralen Bohrung von rechteckigem Querschnitt zur Aufnahme eines Wellenzapfens gleichen Querschnitts zu versehen.

Vorzugsweise sind die Kupplungsnaben jeweils mit einem Paar Kupplungsklauen ausgeführt. Sie greifen mit ihren Kupplungsklauen rechtwinklig gegeneinander versetzt ineinander.

Die kompakte Bauweise wird durch die besondere Form der zentralen Nabenbohrung erreicht, in welche ein entsprechender Endzapfen der angetriebenen oder anzutreibenden Welle greift. Dadurch können die Kupplungsklauen an der Nabe auf einem kleinen Durchmesser angeordnet werden, so daß sich ein sehr kleiner Gesamtdurchmesser der Kupplung ergibt. Die geringe axiale Abmessung wird dadurch erreicht, daß sich die Klaue über die gesamte Nabenlänge erstreckt. Die besondere Gestaltung der Nabenbohrung ermöglicht es also, die gesamte Nabenlänge als Anlagefläche für die elastische Einlage zu nutzen und gleichzeitig den Durchmesser der Kupplung zu minimieren.

Das Drehmoment wird in seinem unteren Bereich, insbesondere im Bereich des Nulldurchgangs, durch die in die zugehörigen Bohrungen an den Stirnseiten der Klauen greifenden, zylinderartigen Dämpfungselemente, deren Mantelflächen konisch sind, spielfrei und formschlüssig übertragen. Die Spielfreiheit wird durch die konische Form der Nocken erreicht.

Bei ansteigenden Drehmomentwerten übernehmen die auf Druck belasteten, elastischen Elemente mit der größeren Steifigkeit zwischen den Klauen zunehmend die Drehmomentübertragung, denn die konischen Dämpfungselemente werden zum großen Teil auf Schub beansprucht und sind somit wesentlich weicher als die allein auf Druck belasteten Elemente. Die Kupplungskennlinie ergibt sich somit aus der Verformung der konischen, schubbeanspruchten und der druckbelasteten Teile. Im Prinzip ergibt sich die Wirkung parallel geschalteter Federn.

In der Zeichnung ist ein Ausführungsbeispiel der Erfindung schematisch dargestellt und nachstehend erläutert. Es zeigen:

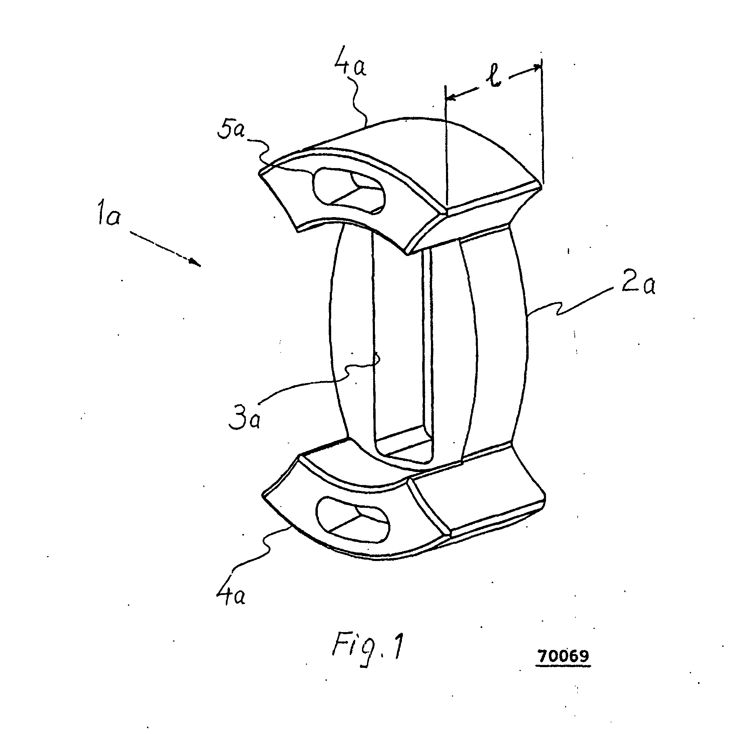

- Fig. 1:: einen Kupplungsnabenkörper,

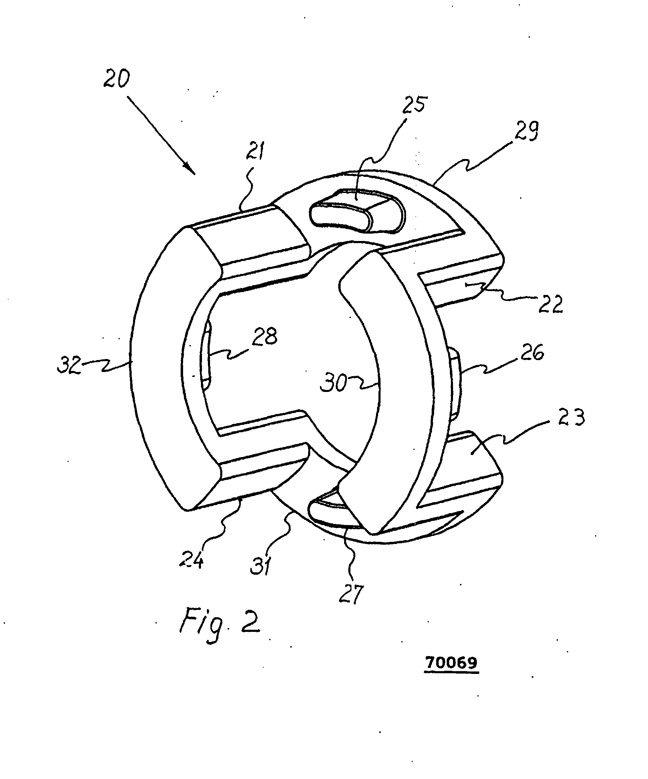

- Fig. 2:: ein vollständiges Dämpfungsteil aus elastomerem Material,

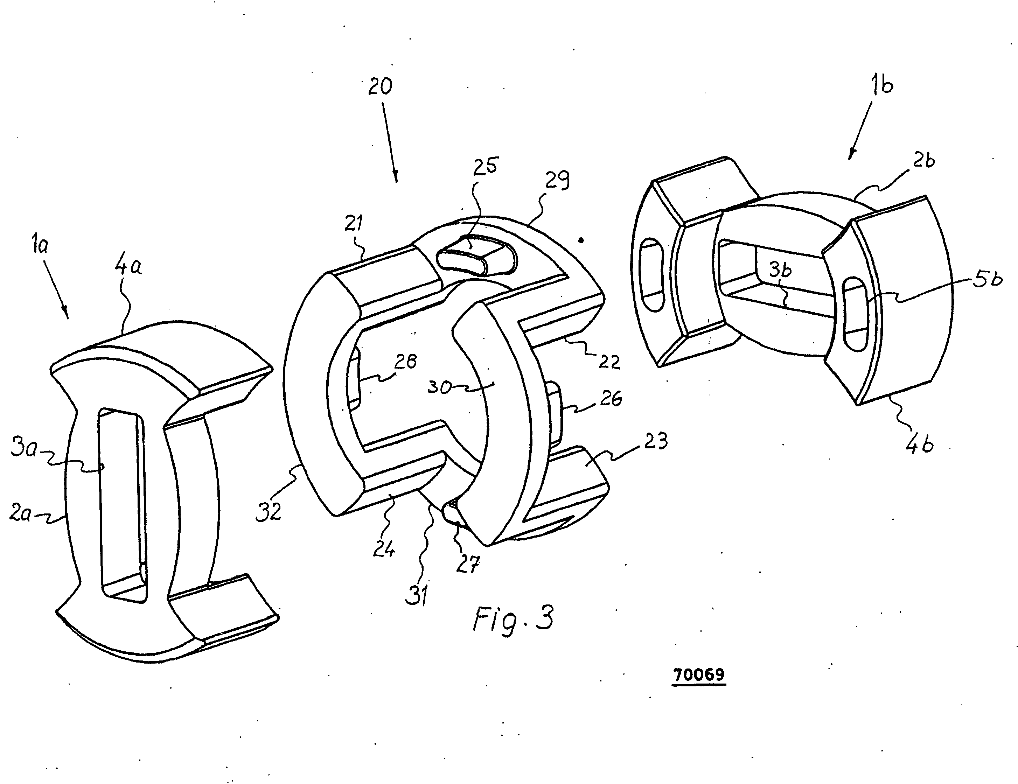

- Fig. 3:: ein Montageschaubild mit zwei Kupplungsnabenkörpern und einem Dämpfungsteil,

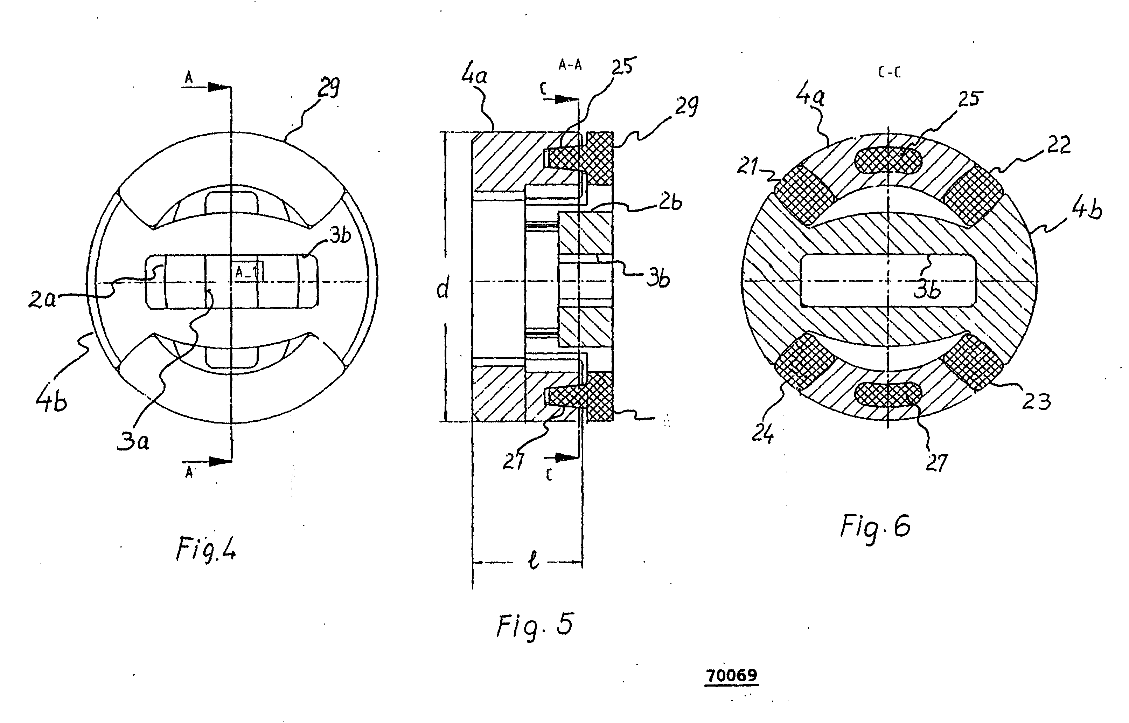

- Fig. 4:: eine Stirnansicht einer einsatzbereiten Kupplung,
- Fig. 5:: den Axialschnitt A-A durch die Kupplung gemäß Fig. 4 und
- Fig. 6:: den Radialschnitt C-C durch die Kupplung.

Der Nabenkörper 1a, 1b besteht aus einem ringförmigen Nabenteil 2a, 2b mit zentraler, rechteckiger Bohrung oder Öffnung 3a, 3b zur Aufnahme eines nicht dargestellten Wellenzapfens.

Der ringförmige Nabenteil ist mit einem Paar Kupplungsklauen 4a, 4b versehen. Die Länge der Klauen ist gleich der Gesamtlänge 1 eines Nabenkörpers. Die einwärts weisenden Stirnflächen der Kupplungsklauen sind mit Aufnahmebohrungen 5a, 5b versehen. Der zwischen den Kupplungsnabenkörpern angeordnete Dämpfungskörper 20 aus einem elastomerem Material besteht aus vier axialgerichteten, druckbelasteten Dämpfungsteilen 21 bis 24 und vier axialgerichteten, zapfenförmigen Dämpfungsteilen 25 bis 28, deren Mantelflächen konisch ausgeführt sind. Alle Dämpfungsteile 21 bis 28 sind untereinander durch kreisbogenförmige Verbindungsteile 29 bis 32 verbunden. Die zapfenförmigen Dämpfungsteile 25 bis 28 befinden sich an den nach innen weisenden Flächen der vorgenannten Verbindungsteile zum Eingriff in die kongruent geformten Aufnahmebohrungen 5a, 5b.

Die Kupplungsnabenkörper 1a, 1b werden auf Endzapfen der nicht dargestellten, miteinander zu kuppelnden An- und Abtriebswellen mit Preßsitz befestigt. Abschließend kann der elastomere Dämpfungskörper 20 mit leichter Vorspannung in einen der Kupplungsnabenkörper gedrückt werden. Anschließend ist lediglich noch die mit dem komplementären Kupplungsnabenkörper verbundene, axial verschiebbare Welle gegebenenfalls unter leichter Pressung bis zum Anschlag gegen den Dämpfungskörper 20 zu schieben.

Durch die konische Gestaltung der Zapfen 25 bis 28 aus elastomerem Material wird sofort eine spielfreie Verbindung der Kupplungsteile erzielt, die auch beim Durchgang durch den Drehmomentwert Null infolge Drehrichtungsumkehr nicht aufgehoben wird.

## Patentansprüche

1. Steckbare, axial- und winkelbewegliche Wellenkupplung zur drehelastischen und spielfreien Drehmomentübertragung mit zwei kongruenten, auf den An- und Abtriebswellen befestigbaren Kupplungsnabenkörpern (1a,1b) aus Metall mit axialgerichteten, drehmomentübertragenden Kupplungsklauen (4a,4b) und zwischen den Klauen angeordneten Dämpfungselementen (21,22,23,24) aus einem elastomeren Material, **dadurch gekennzeichnet, daß**
a) zusätzliche und von den zwischen den Klauen (4a, 4b) angeordneten Dämpfungselementen (21, 22, 23, 24) unabhängige, konische und in Aufnahmeöffnungen (5a, 5b) der Kupplungsklauen greifende, zapfenförmige Dämpfungselemente (25, 26, 27, 28) vorgesehen sind,
b) alle Dämpfungselemente durch kreisbogenförmige Verbindungsteile (29, 30, 31, 32) aus elastomerem Material untereinander verbunden sind,
c) die Verbindungsteile sich in Umfangsrichtung der Kupplung erstrecken und wechselseitig an den Enden der zwischen den Kupplungsklauen positionierten Dämpfungselemente (21, 22, 23, 24) ansetzen, wobei
d) die zapfenförmigen Dämpfungselemente an den den Kupplungsklauen zugewandten Seiten (Innenseiten) der kreisbogenförmigen Verbindungsteile zum Eingriff in die ihnen zugeordneten Aufnahmeöffnungen an den Stirnseiten der Klauen angeordnet sind.

2. Wellenkupplung nach Anspruch 1, **dadurch gekennzeichnet, daß** sich die Klauen über die gesamte Nabenlänge (L) erstrecken.

3. Wellenkupplung nach Anspruch 1 oder 2, **dadurch gekennzeichnet, daß** jeder Kupplungsnabenkörper eine zentrale, rechteckige Bohrung oder Öffnung (3a, 3b) zur Aufnahme eines rechteckigen Wellenzapfens aufweist.

4. Wellenkupplung nach einem der Ansprüche 1 bis 3, **dadurch gekennzeichnet, daß** die Kupplungsnabenkörper mit jeweils einem Paar Kupplungsklauen versehen sind und mit diesen rechtwinklig gegeneinander versetzt ineinandergreifen.

## Claims

1. Plug-in, axially and angularly moveable shaft coupling for the torsionally elastic and play-free transmission of torque, having two congruent coupling hub bodies (1a, 1b) which are made of metal, can be fastened on the drive and driven shafts and have axially directed, torque-transmitting coupling claws (4a, 4b) and damping elements (21, 22, 23, 24) which are made from an elastomeric material and are arranged between the claws, **characterized in that**
a) additional, conical, journal-shaped damping elements (25, 26, 27, 28) which are independent of the damping elements (21, 22, 23, 24) arranged between the claws (4a, 4b) and reach into receiving openings (5a, 5b) of the coupling claws are provided,
b) all of the damping elements are connected to one another by circular-arc-shaped connecting parts (29, 30, 31, 32) made from elastomeric material,
c) the connecting parts extend in the circumferential direction of the coupling and are alternately fitted to the ends of the damping elements (21, 22, 23, 24) positioned between the coupling claws,
d) the journal-shaped damping elements being arranged on those sides (inner sides) of the circular-arc-shaped connecting parts which face the coupling claws for the purpose of engagement in the receiving openings assigned to them on the end sides of the claws.

2. Shaft coupling according to Claim 1, **characterized in that** the claws extend over the entire length of the hub (L).

3. Shaft coupling according to Claim 1 or 2, **characterized in that** each coupling hub body has a central, rectangular hole or opening (3a, 3b) for receiving a rectangular shaft journal.

4. Shaft coupling according to one of Claims 1 to 3, **characterized in that** the coupling hub bodies are provided with a respective pair of coupling claws and, by means of these, engage in each other offset at right angles to each other.

## Revendications

1. Accouplement d'arbre emboîtable, déplaçable axialement et angulairement pour la transmission élastique en rotation et sans jeu d'un couple de rotation, comportant deux corps de moyeu d'accouplement (1a, 1b) en métal, compatibles et pouvant être fixés sur l'arbre d'entraînement et l'arbre de sortie, avec des griffes d'accouplement (4a, 4b) dirigées axialement et transmettant le couple de rotation, et avec des éléments d'amortissement (21, 22, 23, 24) en une matière élastomère disposés entre les griffes, **caractérisé en ce que**
a) des éléments d'amortissement (25, 26, 27, 28) coniques supplémentaires en forme de tenon, indépendants des éléments d'amortissement (21, 22, 23, 24) disposés entre les griffes (4a, 4b), et s'engageant dans des ouvertures de réception (5a, 5b) des griffes d'accouplement, sont prévus,
b) tous les éléments d'amortissement sont reliés entre eux par des éléments de liaison (29, 30, 31, 32) en forme d'arc de cercle en matière élastomère,
c) les éléments de liaison s'étendent dans la direction périphérique de l'accouplement et agissent alternativement sur les extrémités des éléments d'accouplement (21, 22, 23, 24) positionnés entre les griffes d'accouplement,
d) les éléments d'amortissement en forme de tenon étant disposés sur les côtés (côtés intérieurs), tournés vers les griffes d'accouplement, des éléments de liaison en forme d'arc de cercle, pour l'engagement dans les ouvertures de réception qui leur sont affectées sur les côtés frontaux des griffes.

2. Accouplement d'arbre selon la revendication 1, **caractérisé en ce que** les griffes s'étendent sur toute la longueur (L) du moyeu.

3. Accouplement d'arbre selon la revendication 1 ou 2, **caractérisé en ce que** chaque corps de moyeu d'accouplement présente un perçage rectangulaire central ou ouverture (3a, 3b) pour recevoir un tourillon d'arbre rectangulaire.

4. Accouplement d'arbre selon l'une des revendications 1 à 3, **caractérisé en ce que** les corps de moyeu d'accouplement sont pourvus chacun d'une paire de griffes d'accouplement et s'engagent, par celles-ci, les uns dans les autres, décalés à angle droit les uns par rapport aux autres.
